# EUROPÄISCHE PATENTSCHRIFT

(11) **EP 0 353 569 B1**
(45) Veröffentlichungstag und Bekanntmachung des Hinweises auf die Patenterteilung: **29.09.1993**
(21) Anmeldenummer: 89113461.1
(22) Anmeldetag: 21.07.1989
(51) Int. Cl.: H02M 7/757, H02M 5/45

(54) **Verfahren zur Vermeidung von Wechselrichterkippen bei einem Netzrückspeisestromrichter eines netzseitigen Umkehrstromrichters eines Spannungszwischenkreis-Umrichters bei dynamischer Spannungsabsenkung und Schaltungsanordnung zur Durchführung des Verfahrens**
Method to avoid AC instabilities in a negative mains supply inverter for a converter with an intermediate DC circuit in case of a dynamic voltage drop, and circuit arrangement for carrying out the method
Procédé pour éviter des instabilités de tension alternatives d'un inverseur de retour d'un convertisseur à circuit intermédiaire lors d'une baisse de tension dynamique et circuit approprié au procédé

(30) Priorität: 03.08.1988 DE 3826402
(43) Veröffentlichungstag der Anmeldung: 07.02.1990
(73) Patentinhaber: SIEMENS AKTIENGESELLSCHAFT, 80333 München (DE)
(72) Erfinder: Steinshorn, Axel, Dipl.-Ing. (FH), D-6978 Wittighausen (DE)

(56) Entgegenhaltungen:
- DE-A- 3 227 391
- DE-A- 3 533 174
- DE-A- 3 721 631
- Siemens-Katalog: "Drehstromantriebe Simovert-P-Umrichter/Simovert-P-Antriebe"; 1987, Seiten 4/44 ff.

## Beschreibung

Die Erfindung bezieht sich auf ein verfahren zur Vermeidung von Wechselrichterkippen bei einem Netzrückspeisestromrichter eines netzseitigen Umkehrstromrichters eines Spannungszwischenkreis-Umrichters bei dynamischer Spannungsabsenkung oder beim Netzeinbruch, wobei eine Ansteuerung des Netzrückspeisestromrichters bzw. eines Speisestromrichters des netzseitigen Umkehrstromrichters in Abhängigkeit des Wertes eines Zwischenkreis-Stromsollwertes des Spannungszwischenkreis-Umrichters erfolgt, wobei der Zwischenkreis-Stromsollwert aus einem gemessenen Zwischenkreis-Spannungsistwert und einem steuerbaren Zwischenkreis-Spannungssollwert erzeugt und ein gemessener Zwischenkreis-Stromistwert auf Überstrom überwacht wird, und eine Schaltungsanordnung zur Durchführung des Verfahrens.

Aus der DE 35 33 174 A1 ist ein Spannungszwischenkreis-Umrichter bekannt, der einen netzseitigen Umkehrstromrichter, einen Spannungszwischenkreis und einen lastseitigen Stromrichter enthalt. Danach liegt dieser Gleichspanungs-Zwischenkreis-Umrichter mit seinem Umkehrstromrichter an einem dreiphasigen Netz. Der Umkehrstromrichter besteht aus einer Gegenparallelschaltung zweier Stromrichter in Dreiphasen-Brückenschaltung, wobei ein Speisestromrichter für die Steuerung der Leistung vom Netz zur Last und ein Netzrückspeisestromrichter für die Steuerung der Leistung von der Last ins Netz verantwortlich ist. Dieser Netzrückspeisestromrichter ist über einen Rückspeisetransformator mit dem Netz verbunden. Als Last ist beispielsweise eine Drehfeldmaschine als Antrieb vorgesehen. Bei motorischem Betrieb der Drehfeldmaschine ist der Speisestromrichter im Gleichrichterbetrieb angesteuert, wodurch die Leistung aus dem speisenden Netz zur Last gelangt. Bei generatorischem Betrieb der Drehfeldmaschine ist der Netzrückspeisestromrichter im Wechselrichterbetrieb angesteuert, wodurch ins Netz Leistung zurückgespeist wird.

Um Wechselrichterkippen bei Netzrückspeisestromrichtern zu verhindern, wird jeweils vor Übergang vom Motor- in den Generatorbetrieb die Zwischenkreisspannung über eine Sollwertkorrektur der Zwischenkreisspannung abgesenkt. Dabei wird die Zwischenkreisspannung beispielsweise um 15 % abgesenkt. Bei dynamischen Lastwechseln, beispielsweise Reversiervorgängen, kann die Zwischenkreisspannung nicht so schnell über eine Sollwertkorrektur abgesenkt werden, wodurch schon bei noch hoher Zwischenkreisspannung der Netzrückspeisestromrichter im Wechselrichterbetrieb gesteuert wird. Ist die Zwischenkreisspanung zu hoch, tritt ein Überstrom auf, wodurch keine Steuersignale mehr zu den Stromrichterventilen des Netzrückspeisestromrichters von einer Steuerung gelangen, wodurch das stromfuhrende Ventil den Strom nicht abgeben kann. Das bedeutet, der Stromrichter kippt. Auch bei Ansteuerung des Netzrückspeisestromrichters, d.h. bei Rückspeisung der Energie von der Last ins Netz, kann infolge eines Netzeinbruches ein Überstrom entstehen, wodurch infolge der Unterdrückung der Steuersignale durch die Steuerung der Stromrichter kippt.

Dieses Wechselrichterkippen wird bei handelsüblichen Spannungszwischenkreis-Umrichtern dadurch vermieden, daß bei dynamischem Betrieb der Spannungszwischenkreis-Umrichter immer mit abgesenkter Zwischenkreisspannung gesteuert wird. Dies hat zur Folge, daß die installierte Leistung des Spannungszwischenkreis-Umrichters nicht voll für die Last ausgenutzt werden kann.

Eine andere Möglichkeit, das Wechselrichterkippen zu vermeiden, besteht darin, den Netzrückspeisestromrichter des Umkehrstromrichters über einen Hochsetztransfformator an das speisende Netz anzuschließen (Siemens-Katalog DA66 mit dem Titel "Drehstromantriebe SIMOVERT-P-Umrichter/SIMOVERT-P-Antriebe", 1987, Seiten 4/44 ff.). Dadurch kann die Zwischenkreisspannung auf seinen Nennwert gesteuert werden, jedoch muß der Hochsetztransformator und der Umkehrstromrichter für eine höhere Netzspannung ausgelegt werden. Außerdem werden zwei weitere Baugruppen benötigt, wenn der Umrichter mit Netzrückspeisung ausgerüstet ist. Die eine Baugruppe ist eine Kommandostufe für die Netzrückspeisung (KNW) und die andere Baugruppe ist eine Zwischenkreisregelung mit Impulsverstärker (ZRV). Die wesentlichen Funktionen dieser beiden Baugruppen sind:
- Freigabe der Zündsignale über eine Impulsweiche zu einem der antiparallelen Netzstromrichter (Baugruppe KNW);
- Sperren beider Netzstromrichter beim Energierichtungswechsel (Baugruppe KNW);
- Spannungsregler zur Ausregelung der konstant zu haltenden Zwischenkreisspannung (Baugruppe ZRV);
- Erzeugung der Zündimpulse für die Netzstromrichter (Baugruppe ZRV);
- Impulsverstärker für die Zündimpulse der beiden Netzstromrichter (Baugruppe ZRV und KNW).

Der Erfindung liegt nun die Aufgabe zugrunde, ein Verfahren zur Vermeidung von Wechselrichterkippen bei einem Umkehrstromrichter und eine Schaltungsanordnung zur Durchführung des Verfahrens anzugeben, wodurch das Wechselrichterkippen auf einfache Weise verhindert wird, ohne dabei den Spannungszwischenkreis-Umrichter bei abgesenkter Zwischenkreisspannung zu betreiben oder den Umkehrstromrichter mit einem Hochsetztransformator für höhere Netzspannung auslegen zu müssen.

Diese Aufgabe wird erfindungsgemäß dadurch gelöst, daß dem Netzrückspeisestromrichter des Umkehrstromrichters auch dann Steuersignale zugeführt werden, wenn eine Überstrommeldung bei Umsteuerung vom Speisestromrichter auf den Netzrückspeisestromrichter oder bei Betrieb des Netzrückspeisestromrichters vorliegt. Dadurch, daß trotz Überstrommeldung dem stromführenden Stromrichterventilpaar und dem Folgeventilpaar des Netzrückspeisestromrichters Steuersignale zugeführt werden, kann das stromführende Ventilpaar den Strom an das nachfolgende Ventilpaar abgeben, wodurch der Strom kommutiert und der Stromrichter nicht kippen kann. Die Amplitude des Überstromes wird durch die schnell absinkende, beispielsweise 10 ms, Zwischenkreisspannung wieder regelbar. Die Zeit, in der die Zwischekreisspannung absinkt, ist von der Kapazität und der Induktivität des Zwischenkreises abhängig. Bei diesem Verfahren wird die Überstromregelung ignoriert, so daß der Strom kommutieren kann, wobei die Ventile für dynamische Übergänge bemessen sind.

Somit erhält man einen Spannungszwischenkreis-Umrichter, der bei dynamischen Lastwechseln in Betrieb bleibt, wobei der Last die volle installierte Leistung zur Verfügung steht, d.h. am Zwischenkreis steht die Nenn-Zwischenkreisspannung an, und im Rückspeisebetrieb wird ein Wechselrichterkippen verhindert.

Eine Schaltungsanordnung zur Durchführung des Verfahrens enthält im wesentlichen einen Spannungszwischenkreis-Umrichter, bestehend aus einem netzseitigen Umkehrstromrichter mit einem Speisestromrichter und einem Netzrückspeisestromrichter, einem Zwischenkreis und einem lastseitigen Stromrichter, wobei der Zwischenkreis mit einer Zwischenkreis-Spannungswerterfassung versehen ist und eine Zwischenkreis-Stromwerterfassung netzseitig vor dem Umkehrstromrichter angebracht ist, wobei einem ersten Summierglied einer Steuereinrichtung der steuerbare Zwischenkreis-Spannungssollwert und der gemessene Zwischenkreis-Spannungsistwert zugeführt ist, dessen Ausgang mit einem Spannungsregler verbunden ist, wobei an seinem Ausgang ein Zwischenkreis-Stromsollwert ansteht, der einem zweiten Summierglied zugeführt ist, wobei dessen zweiter Eingang mit einem Ausgang der Zwischenkreis-Stromwerterfassung verbunden ist, ist der Ausgang der Zwischenkreis-Stromwerterfassung mit einer Kommandostufe verknüpft, ist das zweite Summierglied mit einem Stromregler mit nachgeschaltetem Steuersatz verbunden, dessen Ausgang mit einem von der Kommandostufe steuerbaren Umschalter verknüpft ist, wobei der Kommandostufe der Zwischenkreis-Stromsollwert zugeführt ist, und stehen am ersten Ausgang des Umschalters Steuersignale für die Stromrichterventile des Speisestromrichters und am zweiten Ausgang des Umschalters Steuersignale für die Stromrichterventile des Netzrückspeisestromrichters an.

Durch den Aufbau dieser Schaltungsanordnung kann man mit einfachen Mitteln trotz einer Überstrommeldung den Ventilen des Netzrückspeisestromrichters Steuersignale zuführen, damit das stromführende Ventilpaar den Strom an das nachfolgende Ventilpaar abgeben kann, wodurch der Stromrichter nicht mehr kippen kann. Dieses Ignorieren einer Überstrommeldung funktioniert bei dynamischen Lastwechseln und bei Netzspannungseinbrüchen.

In einer vorteilhaften Schaltungsanordnung ist als Steuereinrichtung ein Mikrorechner vorgesehen. Dabei sind die einzelnen Schaltungsteile der Steuereinrichtung durch ein Unterprogramm verwirklicht. D.h. das Übertragungsverhalten jedes Schaltungsteils der Steuerung ist durch eine Übertragungsfunktion angegeben, woraus jede Ausgangsgröße eines jeden Schaltungsteils berechnet werden kann. An der Schnittstelle zum Spannungszwischenkreis-Umrichter sind Analog-Ditital-Wandler angebracht. Der Mikrorechner tastet in Abhängigkeit eines Systemtakts den Zwischenkreis-Stromistwert und den Zwischenkreis-Spannungsistwert ab und berechnet mit Hilfe der eingelesenen Unterprogramme den Zwischenkreis-Spannungssollwert, den Zwischenkreis-Stromsollwert, den Steuerwinkel und die Schalterstellung des Umschalters, wodurch ausgewählt wird, ob der Speisestromrichter oder der Netzrückspeisestromrichter des Umkehrstromrichters des Spannungszwischenkreis-Umrichters angesteuert werden soll. Diese Berechnungen und Bereitstellung des Steuerwinkels findet immer zwischen zwei Kommutierungszeitpunkten statt. Durch die Verwendung eines Mikrorechners als Steuereinrichtung ist diese Steuereinrichtung flexibel, d.h., durch ändern von Reglerparameter im Programm kann die Steuereinrichtung an jeden Spannungszwischenkreis-Umrichter bzw. an dessen Last angepaßt werden.

Zur weiteren Erläuterung der Erfindung wird auf die Zeichnung Bezug genommen, in der ein Ausführungsbeispiel nach der Erfindung schematisch veranschaulicht ist.
- FIG 1: zeigt einen Spannungszwischenkreis-Umrichter mit zugehöriger Steuereinrichtung und
- FIG 2: ist ein Teil der Steuereinrichtung nach FIG 1 als Blockschaltbild dargestellt.

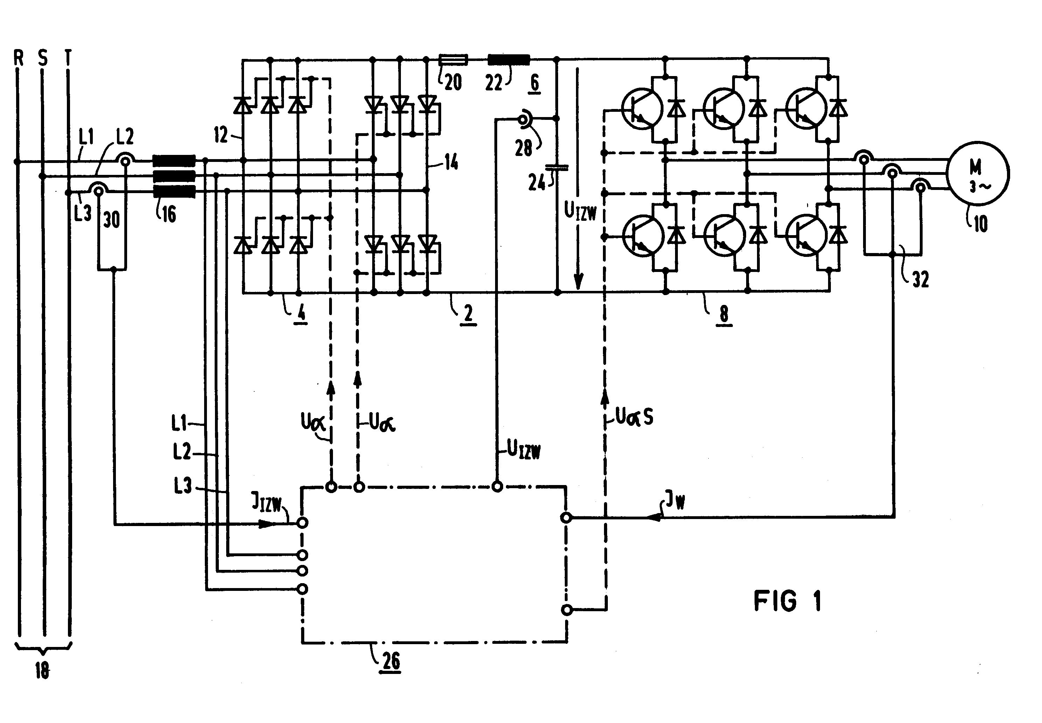

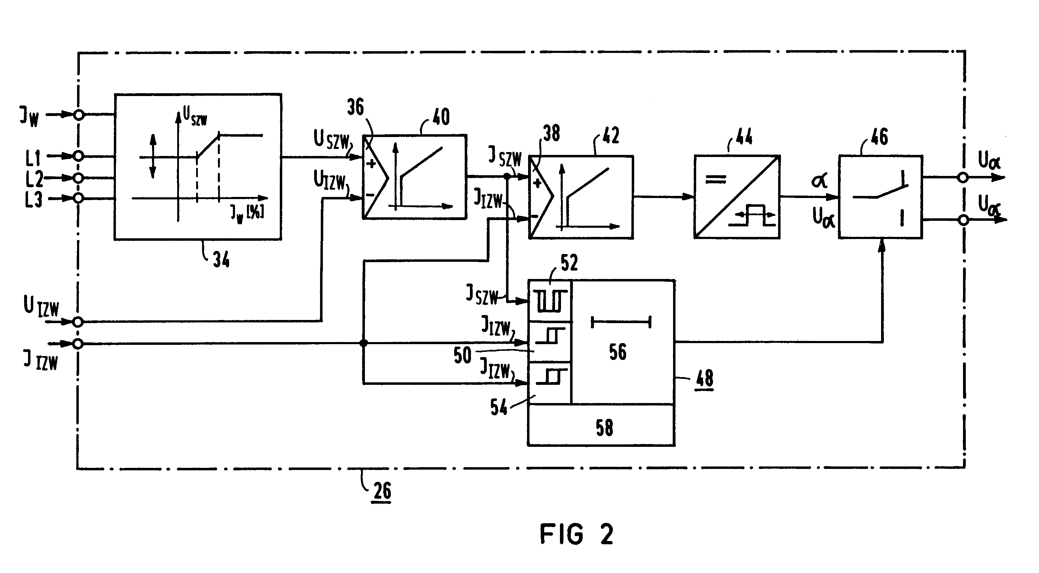

Die FIG 1 zeigt einen Spannungszwischenkreis-Umrichter 2, bestehend aus einem netzseitigen Umkehrstromrichter 4, einem Spannungszwischenkreis 6 und einem lastseitigen Stromrichter 8 mit nachgeschalteter Last 10. Der Umkehrstromrichter 4 enthält einen Speisestromrichter 12 und einen Netzrückspeisestromrichter 14, die beide als Dreiphasen-Brückenschaltungen aufgebaut sind. Der Speisestromrichter 12 und der Netzrückspeisestromrichter 14 sind gegenparallel geschaltet. Der Umkehrstromrichter 4 ist über Netzinduktivitäten 16 und Leitungen L1,L2,L3 mit einem Netz 18 elektrisch leitend verbunden. Der dem Umkehrstromrichter 4 nachgeschaltete Spannungszwischenkreis 6 enthält eine Zwischenkreissicherung 20, eine Zwischenkreisinduktivität 22 und einen Zwischenkreiskondensator 24, an dem die Zwischenkreisspannung U_{IZW} ansteht. Der nachfolgende lastseitige Stromrichter 8 wird aus dem Spannungszwischenkreis 6 versorgt. Die Steuersignale U_{α} und U_{αS} für den Speisestromrichter 12, den Netzrückspeisestromrichter 14 und den lastseitigen Stromrichter 8 werden von einer Steuereinrichtung 26 erzeugt, wobei der Teil der Steuereinrichtung 26, der die Steuersignale U_{α} erzeugt, in FIG 2 als Blockschaltbild näher dargestellt ist. Der Teil der Steuereinrichtung 26, der die Steuersignale U_{αS} für den Stromrichter 8 erzeugt, ist aus Übersichtlichkeitsgründen nicht näher dargestellt worden. Damit die Steuersignale U_{α} und U_{αS} erzeugt werden können, sind der Steuereinrichtung 26 ein Zwischenkreis-Spannungsistwert U_{IZW}, ein Zwischenkreis-Stromistwert I_{IZW} und ein Laststrom I_{W} zugeführt. Der Zwischenkreis-Spannungsistwert U_{IZW} wird mittels einer Zwischenkreis-Spannungswerterfassung 28 und der Zwischenkreis-Stromistwert I_{IZW} mittels einer Zwischenkreis-Stromwerterfassung 30 gemessen. Dabei ist die Zwischenkreis-Stromwerterfassung 30 auf der Wechselstromseite des Umkehrstromrichters 4 angeordnet, wobei der Zwischenkreis-Stromistwert I_{IZW} aus zwei Strangströmen ermittelt wird. Der Laststrom I_{W} wird ebenfalls mittels einer Erfassungeinrichtung 32 gemessen. Außerdem sind der Steuereinrichtung 26 mittels der Leitungen L1,L2 und L3 die Netzspannungen zugeführt.

In FIG 2 ist ein Teil der Steuereinrichtung 26 nach FIG 1 als Blockschaltbild dargestellt. Dieses Blockschaltbild enthält einen Zwischenkreis-Spannungssollwertbildner 34, ein erstes und zweites Summierglied 36 und 38, einen Spannungsregler 40, einen Stromregler 42, einen Steuersatz 44, einen Umschalter 46 und eine Kommandostufe 48. Als Zwischenkreis-Spannungssollwertbildner 34 ist ein Kennliniengeber vorgesehen, dessen Kennlinie in Abhängigkeit der Amplitude der Netzspannung horizontal verschiebbar ist, angedeutet durch einen Doppelpfeil. Die Kennlinie zeigt die Funktion U_{SZW} (I_{W}), wobei der Laststrom I_{W} in Prozent angegeben wird. Durch diesen Zwischenkreis-Spannungssollwertbildner 34 erhält man in Abhängigkeit des Laststromes I_{W} und der Amplitude der Netzspannung einen Zwischenkreis-Spannungssollwert U_{SZW}, der einem ersten Eingang des ersten Summiergliedes 36 zugeführt ist. Am zweiten Eingang des ersten Summiergliedes 36 steht der gemessene Zwischenkreis-Spannungsistwert U_{IZW} an. Mittels des Summiergliedes 36 wird eine Regeldifferenz U_{SZW} - U_{IZW} bestimmt, aus der mit Hilfe des Spannungsreglers 40 ein Zwischenkreis-Stromsollwert I_{SZW} erzeugt wird. Als Spannungsregler 40 ist ein proportional-integral wirkender Regler, auch PI-Regler genannt, vorgesehen. Der Ausgang dieses PI-Reglers ist mit einem ersten Eingang des zweiten Summiergliedes 38 verknüpft, wobei an seinem zweiten Eingang der gemessene Zwischenkreis-Stromistwert I_{SZW} ansteht. Die erzeugte Regeldifferenz I_{SZW} - I_{IZW} ist dem nachgeschalteten Stromregler 42 zugeführt, wobei ebenfalls als Stromregler 42 ein PI-Regler vorgesehen ist. Ausgangsseitig ist dieser Stromregler 42 mit dem Steuersatz 44 verbunden, dem der Umschalter 46 nachgeschaltet ist. In Abhängigkeit des Ausgangsstromes des Stromreglers 42 erzeugt der Steuersatz 44 einen Steuerwinkel α bzw. ein Steuersignal U_{α}. Mittels des von der Kommandostufe 48 steuerbaren Umschalter 46 gelangt das Steuersignal U_{α} an die Stromrichterventile des Speisestromrichters 12 oder des Netzrückspeisestromrichters 14.

Die Kommandostufe 48 enthält eine Nullstromerfassung 50, einen Grenzwertgeber 52, eine Überstromerfassung 54, ein Zeitglied 56 und eine Koordinierungsstufe 58. Mittels der Kommandostufe 48 wird der gemessene Zwischenkreis-Stromistwert I_{IZW} auf Nullstrom und auf Überstrom überwacht. Gleichzeitig wird von der Kommandostufe 48 auch noch der Zwischenkreis-Stromsollwert I_{SZW} auf einen Grenzwert überwacht. Die Koordinierungsstufe 58 wertet die Nullstromerfassung 50, den Grenzwertgeber 52 und die Überstromerfassung 54 aus. Dieses Ergebnis wird zeitverzögert an den Umschalter 46 weitergegeben, wodurch das mittels des Steuersatzes 44 erzeugte Steuersignal U_{α} dem Speisestromrichter 12 oder dem Netzrückspeisestromrichter 14 zugeführt wird. Als Nullstromerfassung 50 bzw. Grenzwertgeber 52 bzw. Überstromerfassung 54 bzw. Zeitglied 56 kann beispielsweise ein Komparator bzw. ein Fensterkomparator bzw. ein Komparator bzw. eine flankengesteuerte monostabile Kippschaltung vorgesehen sein. Als Koordinierungsstufe 58 kann eine Logikschaltung vorgesehen sein.

In einer vorteilhaften Ausführungsform ist dieser Teil der Steuereinrichtung 26 bzw. die gesamte Steuereinrichtung 26 ein Mikrorechner. Die einzelnen Blöcke der Steuereinrichtung 26 sind dann als Programmteile bzw. als Unterprogramme im Mikrorechner hinterlegt. Die vom Spannungszwischenkreis-Umrichter 2 der Steuereinrichtung 26 zugeführten Istwerte werden mittels Analog-Digital-Wandler gewandelt und der erzeugte Steuerwinkel α wird dem Spannungszwischenkreis-Umrichter 2 zugeführt. Dabei wird jeweils zwischen zwei Kommutierungszeitpunkten ein Steuerwinkel α in Abhängigkeit des Laststromes I_{W}, des Zwischenkreis-Stromistwertes I_{IZW} und des Zwischenkreis-Spannungsistwertes U_{IZW} berechnet, wobei die Rechenzeit kleiner ist als die Zeitdifferenz zwischen zwei Kommutierungszeitpunkten. Durch die Verwendung des Mikrorechners ist die Steuereinrichtung 26 universell, da durch Austauschen des Programms, das bekannter Weise in einem Read-Only-Memory-Speicher ROM gespeichert ist, die Steuereinrichtung 26 auf jeden beliebigen Spannungszwischenkreis-Umrichter 2 abstimmbar ist.

Es kommen beim Betrieb eines Zwischenkreis-Umrichter 2, insbesondere bei der Steuerung eines Umkehrstromrichters 4 zwei Fälle vor, wodurch der Netzrückspeisestromrichter 14 kippen kann. Als Ursache können Netzeinbrüche beim Rückspeisen der Energie von der Last des Versorgungsnetz 18 oder bei Rückspeisung bei zu hoher Zwischenkreisspannung U_{IZW} während der Umsteuerung vom Speisestromrichter 12 auf den Netzrückspeisestromrichter 14 verantwortlich sein.

Beim erstgenannten Fall bricht infolge des Netzeinbruches die Zwischenkreisspannung U_{IZW} auch ein, wodurch der Zwischenkreis-Stromistwert I_{IZW} schnell ansteigt. Sobald der Zwischenkreis-Stromistwert I_{IZW}einen Grenzwert erreicht, erfolgt eine Überstrommeldung. Die Koordinierungsstufe 58 registriert diese Meldung und fragt gleichzeitig den Zwischenkreis-Stromsollwert I_{SZW} ab bzw. hat vom Grenzwertgeber 52 ein Signal anstehen, das besagt, daß der Netzrückspeisestromrichter 14 angesteuert wird. Unter diesen Voraussetzungen wird die Überstrommeldung von der Überstromerfassung 54 ignoriert, so daß weiter Steuersignale U_{α} an die Stromrichterventile des Netzrückspeisestromrichters 14 gegeben werden können. Dadurch kann der Strom weiter kommutieren, wodurch der Stromrichter nicht kippen kann. Außerdem kann der Überstrom durch den Eingriff der Steuereinrichtung 26 in wenigen 10 ms begrenzt werden.

Beim zweitgenannten Fall, d.h. bei dynamischem Betrieb oder Revesiervorgängen der Drehfeldmaschine, wird die Energiezufuhr vom Netz zur Last in kürzester Zeit umgekehrt. Das hat zur Folge, daß bereits bei noch hoher Zwischenkreisspannung U_{IZW} der Umkehrstromrichter 4 in den Wechselrichterbetrieb umgesteuert wird, d.h. es wird vom Speisestromrichter 12 auf den Netzrückspeisestromrichter 14 umgesteuert. Einen solchen Vorgang kann die Steuereinrichtung 26 bzw. die Kommandostufe 48 daran erkennen, daß die Nullstromerfassung 50 ein Signal erzeugt, sobald der Zwischenkreis-Stromistwert I_{IZW} Null ist und der Grenzwertgeber 52 ein Signal liefert, das besagt, daß der Netzrückspeisestromrichter 14 angesteuert wird. Unter diesen Voraussetzungen wird eine infolge des Stromanstieges erfolgte Überstrommeldung ignoriert, damit der Strom im Stromrichter 14 kommutieren kann.

Somit erhält man ein Verfahren zur Vermeidung von Wechselrichterkippen, bei einem netzseitigen Umkehrstromrichter 4 eines Spannungszwischenkreis-Umrichters 2 beim dynamischen Betrieb bzw. bei Netzeinbrüchen und eine besonders einfach aufgebaute Schaltungsanordnung zur Durchführung des erfindundgsgemäßen Verfahrens.

## Patentansprüche

1. Verfahren zur Vermeidung von Wechselrichterkippen bei einem Netzrückspeisestromrichter (14) eines netzseitigen Umkehrstromrichters (4) eines Spannungszwischenkreis-Umrichters (2) bei dynamischer Spannungsabsenkung oder beim Netzeinbruch, wobei eine Ansteuerung des Netzrückspeisestromrichters (14) bzw. eines Speisestromrichters (12) des netzseitigen Umkehrstromrichters (4) in Abhängigkeit des Wertes eines Zwischenkreis-Stromsollwertes (I_{SZW}) des Spannungszwischenkreis-Umrichters (2) erfolgt, wobei der Zwischenkreis-Stromsollwert (I_{SZW}) aus einem gemessenen Zwischenkreis-Spannungsistwert (U_{IZW}) und einem steuerbaren Zwischenkreis-Spannungssollwert (U_{SZW}) erzeugt und ein gemessener Zwischenkreis-Stromistwert (I_{IZW}) auf Überstrom überwacht wird,
**dadurch gekennzeichnet**,
daß dem Netzrückspeisestromrichter (14) des Umkehrstromrichters (4) auch dann Steuersignale (U_{α}) zugeführt werden, wenn eine Überstrommeldung bei Umsteuerung vom Speisestromrichter (12) auf den Netzrückspeisestromrichter (14) oder bei Betrieb des Netzrückspeisestromrichters (14) vorliegt.

2. Verfahren nach Anspruch 1,
**dadurch gekennzeichnet**,
daß der Zwischenkreis-Spannungssollwert (U_{SZW}) in Abhängigkeit eines vom lastseitigen Stromrichter (8) steuerbaren Laststromes (I_{W}) und eines Spannungswertes des speisenden Netzes (18) des Umkehrstromrichters (4) einstellbar ist.

3. Schaltungsanordnung zur Durchführung ders Verfahrens nach Anspruch 1, mit einem Spannungszwischenkreis-Umrichter (2), bestehend aus einem netzseitigen Umkehrstromrichter (4) mit einem Speisestromrichter (12) und einem Netzrückspeisestromrichter (14), einem Zwischenkreis (6), einem lastseitigen Stromrichter (8) und einer Steuereinrichtung (26), die ein erstes Summierglied (36) mit nachgeschaltetem Spannungsregler (40) zur Zwischenkreis-Spannungsregelung, ein zweites Summierglied (38) mit nachgeschaltetem Stromregler (42), dem ein Steuersatz (44) mit nachgeschaltetem Umschalter (46) nachgeschaltet ist, und eine Kommandostufe (48) enthält, wobei der Spannungsregler (40) ausgangsseitig mit einem Grenzwertgeber (52) der Kommandostufe (48) und eine Zwischenkreis-Stromwerterfassung (30) ausgangsseitig mit dem zweiten Summierglied (38) und mit einer Überstromerfassung (54) der Kommandostufe (48) verbunden sind, deren Ausgang mit dem Umschalter (46) verbunden ist, **dadurch gekennzeichnet,** daß die Kommandostufe (48) eine Nullstromerfassung (50), ein Zeitglied (56) und eine Koodinierungsstufe (58) enthält, wobei die Zwischenkreis-Stromerfassung (30) ausgangsseitig mit dieser Nullstromerfassung (50) verbunden ist und wobei die Koordinierungsstufe (58) eingangsseitig mit dem Grenzwertgeber (52), der Überstromerfassung (54) und der Nullstromerfassung (50) und ausgangsseitig mit dem Zeitglied (56) verknüpft ist.

4. Schaltungsanordnung nach Anspruch 3, **dadurch gekennzeichnet,** daß die Steuereinrichtung (26) eingangsseitig einen Zwischenkreis-Spannungssollwertbildner (34) enthält, der eingangsseitig mit einem Netz (18) und einer Laststrom-Erfassungseinrichtung (32) und ausgangsseitig mit dem ersten Summierglied (36) verknüpft ist.

5. Schaltungsanordnung nach Anspruch 4**, dadurch gekennzeichnet,** daß als Zwischenkreis-Spannungssollwertbilder (34) ein steuerbarer Spannungs-Strom-Kennliniengeber vorgesehen ist.

6. Schaltungsanordnung nach Anspruch 3, **dadurch gekennzeichnet,** daß als Steuereinrichtung (26) ein Mikrorechner vorgesehen ist.

## Claims

1. Method for avoiding commutation failure in a regenerative converter (14) of a supply reversible converter (4) of a voltage-source converter (2) in the case of dynamic voltage depression or a supply voltage dip, wherein activation of the regenerative converter (14) or of a supply converter (12) of the supply reversible converter (4) is effected as a function of the value of a link current setpoint (I_{SZW}) of the voltage-source converter (2), wherein the link current setpoint (I_{SZW}) is generated from a measured link voltage actual value (U_{IZW}) and a controllable link voltage setpoint (U_{SZW}), and wherein a measured link current actual value (I_{IZW}) is monitored for overcurrent, characterised in that control signals (Uα) are supplied to the regenerative converter (14) of the reversible converter (4), regardless of the presence of an overcurrent status message, when either there is a switch from the supply converter (12) to the regenerative converter (14), or in the case of operation of the regenerative converter (14).

2. Method according to claim 1, characterised in that the link voltage setpoint (U_{SZW}) can be adjusted as a function of a load current (I_{W}), which can be controlled by the load-side converter (8), and of a voltage level of the supply system (18) of the reversible converter (4).

3. Circuit arrangement for carrying out the method according to claim 1, having a voltage-source converter (2), consisting of a supply reversible converter (4) with a supply converter (12) and a regenerative converter (14), a link (6), a load-side converter (8) and a control device (26) which contains a first summing element (36) with subsequently connected voltage regulator (40) for the link voltage control, a second summing element (38) with a subsequently connected current regulator (42), to which there is subsequently connected a firing unit (44) with subsequently connected change-over switch (46), and a sequential logic module (48), with the voltage regulator (40) being connected on the output side with a limit monitoring indicator (52) of the sequential logic module (48) and with a link current level detector (30) being connected on the output side with the second summing element (38) and with an overcurrent detector (54) of the sequential logic module (48), the output of which is connected with the change-over switch (46), characterised in that the sequential logic module (48) contains a zero-current detector (50), a timing element (56) and a coordinating module (58), with the link current detector (30) being connected on the output side with this zero-current detector (50), and with the coordinating module (58) being connected on the input side with the limit monitoring indicator (52), the overcurrent detector (54) and the zero-current detector (50) and on the output side with the timing element (56).

4. Circuit arrangement according to claim 3, characterised in that the control device (26) contains on the input side a link voltage setpoint compensator (34) which on the input side is connected with a supply system (18) and a load current-detection device (32) and on the output side is connected with the first summing element (36).

5. Circuit arrangement according to claim 4, characterised in that a controllable voltage-current signal characterizer is provided as the link voltage setpoint compensator (34).

6. Circuit arrangement according to claim 3, characterised in that a microcomputer is provided as the control device (26).

## Revendications

1. Procédé pour éviter des instabilités de basculement d'onduleurs dans un convertisseur statique (14) de rétroalimentation du réseau, d'un convertisseur inverseur (4), situé côté réseau, d'un mutateur à circuit intermédiaire de tension (2), lors d'une chute dynamique de la tension ou d'une panne du réseau, selon lequel une commande du convertisseur statique (14) de rétroalimentation du réseau ou d'un convertisseur statique d'alimentation (12) du convertisseur inverseur (4) situé côté réseau est exécutée en fonction d'une valeur de consigne (I_{SZW}) du courant du circuit intermédiaire du mutateur à circuit intermédiaire de tension (2), et selon lequel la valeur de consigne (I_{SZW}) du courant du circuit intermédiaire est formée à partir d'une valeur réelle mesurée (U_{IZW}) de la tension du circuit intermédiaire et d'une valeur de consigne commandable (U_{SZW}) de la tension du circuit intermédiaire, et une valeur réelle mesurée (I_{IZW}) du courant du circuit intermédiaire est contrôlée pour déterminer s'il s'agit d'une surintensité,
caractérisé par le fait
que des signaux de commande (Uα) sont également envoyés au convertisseur statique (14) de rétroalimentation du réseau du convertisseur inverseur (4) lorsqu'une signalisation de surintensité est présente lors de l'inversion de la commande du convertisseur statique d'alimentation (12) sur le convertisseur statique (14) de rétroalimentation du réseau ou lors du fonctionnement de ce convertisseur statique (14) de rétroalimentation du réseau.

2. Procédé suivant la revendication 1, caractérisé par le fait que la valeur de consigne (U_{SZW}) de la tension du circuit intermédiaire est réglable en fonction d'un courant de charge (I_{W}), qui peut être commandé par le convertisseur statique (8) situé côté charge, et d'une valeur de tension du réseau d'alimentation (18) du convertisseur inverseur (4).

3. Montage pour la mise en oeuvre du procédé suivant la revendication 1, comportant un convertisseur a circuit intermédiaire de tension (2), constitué par un convertisseur inverseur (4) situé côté réseau, comportant un convertisseur statique d'alimentation (12) et un convertisseur statique (14) de rétroalimentation du réseau, un circuit intermédiaire (6), un convertisseur statique (8) situé côté charge et un dispositif de commande (26), qui comporte un premier circuit additionneur (36) en aval duquel est branché un régulateur de tension (14) servant à régler la tension du circuit intermédiaire, un second circuit additionneur (38) en aval duquel est branché un régulateur de courant (42), en aval duquel est branchée une unité de commande (44) en aval de laquelle est branché un commutateur (46), et un étage de commande (48), le régulateur de tension (40) étant raccordé côté sortie à un générateur de valeur limite (52) de l'étage de commande (48), tandis qu'une unité (30) de détection de la valeur du courant du circuit intermédiaire est raccordée, côté sortie, au second circuit additionneur (38) et à une unité (54) de détection d'une surintensité de l'étage de commande (48), dont la sortie est reliée au commutateur (46), caractérisé par le fait que l'étage de commande (43) comporte une unité (50) de détection d'un courant nul, un circuit de temporisation (56) et un étage de coordination (58), l'unité (30) de détection du courant du circuit intermédiaire étant raccordée, côté sortie, à cette unité (50) de détection du courant nul, tandis que l'étage de coordination (58) est raccordé, côté entrée, au générateur de valeur limite (52), à l'unité (54) de détection d'une surintensité et à l'unité (50) de détection du courant nul, et, côté sortie, au circuit de temporisation (56).

4. Montage suivant la revendication 3, caractérisé par le fait que le dispositif de commande (26) comporte, côté entrée, un dispositif (34) de formation de la valeur de consigne de la tension du circuit intermédiaire, qui est raccordé, côté entrée, à un réseau (18) et à un dispositif (32) de détection du courant de charge et, côté sortie, au premier circuit additionneur (36).

5. Montage suivant la revendication 4, caractérisé par le fait qu'il est prévu comme dispositif (34) de formation de la valeur de consigne de la tension du circuit intermédiaire, un générateur commandable de courbes caractéristiques tension-courant.

6. Montage suivant la revendication 3, caractérisé par le fait qu'il est prévu un micro-ordinateur comme dispositif de commande (26).
